# EUROPÄISCHE PATENTSCHRIFT

(11) **EP 1 450 216 B1**
(45) Veröffentlichungstag und Bekanntmachung des Hinweises auf die Patenterteilung: **20.07.2005**
(21) Anmeldenummer: 04011669.1
(22) Anmeldetag: 30.11.2000
(51) Int. Cl.: G03G 15/02

(54) **Korotronanordung mit einer Spannungsversorgungseinheit**
Corotron device with power supply unit
Dispositif de corotron avec une unité d'alimentation électrique

(30) Priorität: 30.11.1999 DE 19957615
(43) Veröffentlichungstag der Anmeldung: 25.08.2004
(62) Teilanmeldung aus: 00983196.7
(73) Patentinhaber: Océ Printing Systems GmbH, 85586 Poing (DE)
(72) Erfinder: Rumpel, Peter, 83620 Feldkirchen-Westerham (DE); Gack, Hartmut, 81547 München (DE)
(74) Vertreter: Schaumburg, Thoenes, Thurn, Landskron

(56) Entgegenhaltungen:
- US-A- 3 685 895
- PATENT ABSTRACTS OF JAPAN Bd. 0134, Nr. 60 (P-946), 18. Oktober 1989 (1989-10-18) & JP 1 179960 A (KONICA CORP), 18. Juli 1989 (1989-07-18)
- PATENT ABSTRACTS OF JAPAN Bd. 0181, Nr. 21 (P-1700), 25. Februar 1994 (1994-02-25) & JP 5 307312 A (RICOH CO LTD), 19. November 1993 (1993-11-19)
- PATENT ABSTRACTS OF JAPAN Bd. 0080, Nr. 42 (P-256), 23. Februar 1984 (1984-02-23) & JP 58 193560 A (FUJI XEROX KK), 11. November 1983 (1983-11-11)

## Beschreibung

Die Erfindung betrifft eine Anordnung für ein Korotron für elektrographische Prozesse, insbesondere in einem Drucker oder Kopierer. Träger der Anordnung nimmt die Spannungsversorgungseinheit zum Versorgen des Korotrons auf. Das Korotron dient zum elektrischen Aufladen eines Trägermaterials für ein latentes Bild, insbesondere eines Fotoleiterbandes.

Die erhöhten Anforderungen an die technische Leistungsfähigkeit der Druck- und Kopierverfahren machen es notwendig, die einzelnen Elemente der Druck- und Kopiereinrichtung präzise zu justieren. Um z.B. das elektrische Aufladen von Trägermaterial durch ein Ladekorotron effektiv zu gestalten, soll der Abstand zwischen dem Korotrondraht und dem Trägermaterial klein sein. Geringe Abweichungen in der Parallelität der Ebene des Trägermaterials und der Längsachse des Korotrondrahtes bewirken ein ungleichmäßiges Aufladen des Trägermaterials, welches zu einer ungleichmäßigen Ausbildung des Druckbildes führt. Beeinflussende Faktoren für die gleichmäßige Aufladung des Trägermaterials sind unter anderem die Abweichung von der Parallelität und der Gesamtabstand zwischen Korotrondraht und Trägermaterial. Beim Verringern des Abstandes zwischen Korotrondraht und Trägermaterial wirkt sich die Abweichung in zunehmendem Maße ungünstig auf die Qualität des Druckbildes aus.

Aus den Patentschriften US-A-5,449,906 und US-A-4,258,258 eine Anordnung bekannt, die eine Korotrondrahteinheit für eine elektrographische Druck- oder Kopiereinrichtung enthält. Der Korotrondraht ist mit Endstücken versehen, wobei der Korotrondraht in einem Einschub angeordnet ist, der ein Reflektorelement und eine elektrische Anschlussklemme enthält. Durch diese Anordnung besteht die Möglichkeit den Korotrondraht zusammen mit dem Einschub leicht auszutauschen. Bei geringem Abstand zwischen Korotrondraht und Trägermaterial ist es jedoch unbedingt erforderlich, dass der Korotrondraht zusammen mit dem Einschub gegenüber dem Trägermaterial nach dem Austausch neu ausgerichtet wird, um die parallele Ausrichtung der Längsachse des Korotrondrahtes zu der Ebene des Trägermaterials exakt einzustellen. Für diese Tätigkeit ist qualifiziertes Servicepersonal erforderlich.

Aus der Patentschrift US-A-5,449,906 ist eine Anordnung bekannt, mit der es möglich ist, Korotrondrähte in eine Korotronanordnung einzusetzen. Der Korotrondraht wird an einem Halteelement mit federnden Klammern befestigt. Zusammen mit dem Halteelement werden die Korotrondrähte in die Korotronanordnung eingesetzt, in der ebenfalls federnde Klammern angeordnet sind. Beim Einsetzen ist der Korotrondraht von den Klammern des Halteelements und von den Klammern der Korotronanordnung teilweise umschlossen. Die Klammern der Korotronanordnung üben eine größere Kraft auf den Korotrondraht aus als die Klammern des Halteelements, so dass sich beim Entfernen des Halteelements aus der Korotronanordnung die Klammern des Halteelements vom Korotrondraht lösen. Der Korotrondraht verbleibt in der Korotronanordnung und der Einsetzvorgang ist beendet. Ein Entfernen des Korotrondrahtes aus der Korotronanordnung ist mit diesem Halteelement nicht möglich. Das Entfernen des Korotrondrahtes ist nur durch mechanische Einwirkung auf den Korotrondraht und/oder auf dessen Befestigungselemente möglich. Bei diesem Vorgehen kann der Korotrondraht zerbrechen. Gerade bei glasummantelten Korotrondrähten stellt dies ein erhebliches Verletzungsrisiko für die ausführende Person dar.

Der nächste stand der Technik US-A 3 685 895 beschreibt ein Gestell zum elektrostatischen Aufladen eines Trägermaterials, bei dem Korotrondrähte in Blöcken gelagert sind. Die Blöcke sind innerhalb eines über das Trägermaterial bewegbaren Arms angeordnet. Der Arm wird entlang der rechten und linken Kante des Gestells über das Trägermaterial entlang geführt. Auf den bewegbaren Arm ist eine Spannungsversorgungseinheit zum Versorgen der Korotrondrähte vorgesehen.

Aus der englischen Zusammenfassung der JP-A-01-179 960 ist ein Rahmen zum Halten eines Korotrondrahtes bekannt, der vertikal in ein Bilderzeugungsgerät einsetzbar ist. Das Zuführen der Versorgungsspannung des Korotrondrahts von einer Stromversorgungseinheit zum Rahmen erfolgt mit Hilfe von Steckverbindern.

Aufgabe der Erfindung ist es, eine einfach aufgebaute Anordnung für ein Korotron anzugeben, durch die eine hohe Druckqualität erreicht wird.

Durch diese Anordnung wird erreicht, daß die einzelnen Elemente kompakt angeordnet sind, und daß die Wege der Hochspannungsleitungen minimiert sind. Die Störeinflüsse durch ein elektrisches Streufeld auf das Trägermaterial sind demnach gering.

Bei einer Ausführungsform der Erfindung ist in dem Träger mindestens ein Korotrondrahteinschub angeordnet, in dem mindestens ein Korotrondraht angeordnet ist, insbesondere bis zu drei Korotrondrähte angeordnet sind. Durch den modularen Aufbau des Druckers oder Kopierers wird erreicht, daß eine wartungsfreundliche Anordnung gegeben ist, die es ermöglicht, den Korotrondrahteinschub aus dem Drucker oder Kopierer zu entfernen, um z.B. einen Austausch der Korotrondrähte außerhalb des Druckers oder Kopierers durchzuführen. Es besteht aber auch die Möglichkeit, bei Servicearbeiten ganze Korotrondrahteinschübe auszutauschen, um die Stillstandszeiten zu verringern. Durch variable Anordnung von bis zu drei Korotrondrähten pro Korotrondrahteinschub ist das Anpassen eines Korotrondrahteinschubs an verschiedene Drucker oder Kopierer gegeben. Bei Bedarf können auch mehrere Korotrondrahteinschübe in Bewegungsrichtung des Trägermaterials angeordnet werden, um das Auf- oder Entladen des Trägermaterials zu intensivieren.

In einer weiteren Ausführungsform der Erfindung ist die Spannungsversorgungseinheit in einer parallelen Ebene des Korotrondrahteinschubs angeordnet. Dadurch wird erreicht, daß die Spannungsversorgungseinheit in unmittelbarer Nähe des Korotrondrahteinschubs angeordnet ist und somit Störeinflüsse durch die Spannungsversorgungseinheit gering sind. Die Wirkung des elektrischen Streufeldes der Spannungsversorgungseinheit auf das Trägermaterial wird durch Elemente zwischen der Spannungsversorgungseinheit und dem Trägermaterial, insbesondere durch einen elektrisch leitenden Reflektor, gemindert.

Bei einer Weiterbildung der Erfindung enthält der Korotrondrahteinschub mindestens ein Reflektorelement, das insbesondere als Teil eines hartverchromten Aluminiumstrangprofils ausgebildet ist, das durch elektrisch isolierende Elemente isoliert von dem Potential des Gehäuses ist. Dadurch wird erreicht, daß die Ionisationswolke vom Reflektor in Richtung Trägermaterial reflektiert und dadurch die Aufladung des Fotoleiterbandes intensiviert. Durch Verwenden eines hartverchromten Aluminiumstrangprofils ist ein wirkungsvoller Korrosionsschutz des Reflektorelements gegeben. Außerdem ist es möglich, das isolierte Reflektorelement auf ein vorbestimmtes Potential zu legen, um das Reflexionsvermögen des Reflektors zu erhöhen.

Bei einer weiteren Ausgestaltung der Erfindung enthält das als Strangprofil ausgebildete Reflektorelement Schlitze, durch die ein in der Korotroneinrichtung entstehendes Ozon-Luftgemisch abgesaugt wird. Das Absaugen des Ozon- Luftgemisches kann über einen Kanal erfolgen, den das Reflektorelement mit seiner dem Korotrondraht abgewandten Seite und der Träger bilden. Der Kanal ist über Verbindungselemente mit einer Ozonvernichtungseinheit verbunden.

Je nach Ausführungsform der Verbindungselemente sind diese an ihren Berührungsflächen so ausgebildet, daß sie, insbesondere durch ein gegenseitiges Überlappen, eine ausreichende Dichtheit gewährleisten oder es werden an den Berührungsflächen der Verbindungselemente zusätzliche Dichtelemente angeordnet. Dadurch wird erreicht, daß das entstehende und für den Menschen schädliche Ozon sicher abgeführt wird und eine Gefährdung für den Menschen ausgeschlossen ist.

Bei einer Ausführungsform der Erfindung ist die längere der beiden Parallelseiten des trapezförmigen Querschnitts des ersten Verbindungselements so ausgespart, daß das zweite Verbindungselement in das erste Verbindungselement auf der Überlappungslänge eingesetzt werden kann. Die trapezförmigen Querschnitte, die vorzugsweise eine konstante Wandstärke und die Form eines gleichschenkligen Trapezes haben, sind so aufeinander abgestimmt, daß die Innenflächen des ersten Verbindungselements und die Außenflächen des zweiten Verbindungselements Dichtflächen bilden. Diese Dichtflächen berühren sich in Betriebslage und dichten somit die Verbindungselemente gegeneinander ab. Die Symmetrieachsen der beiden trapezförmigen Querschnitte liegen dabei auf einer Geraden. Durch die schrägen Schenkel erfolgt eine Zentrierung der beiden Verbindungselemente beim gegenseitigen Annähern der beiden Verbindungselemente auf ihren Symmetrieachsen.

Bei einer anderen Weiterbildung der Erfindung ist jeder Korotrondrahteinschub durch eine separate Spannungsversorgungseinheit gespeist, die mindestens zwei Netzteile enthält, wobei ein Netzteil eine Spannung, vorzugsweise im Bereich von 16 bis 20 kV mit einer Frequenz im Bereich von 3 bis 5 kHz, zur Versorgung des Korotrondrahtes und ein zweites Netzteil eine Gleichspannung, vorzugsweise im Bereich von 3 bis 5 kV, zur Versorgung des Reflektors erzeugt. Durch diese Maßnahmen wird erreicht, daß jeder Korotrondrahteinschub separat versorgt wird, wodurch die Leitungswege mit hochspannungsführenden Leitungen minimiert sind. Durch die Anordnung kann die Kombination von mehreren Korotrondrahteinschüben je nach Erfordernis im Drucker oder Kopierer unkompliziert erfolgen.

Die Fertigung und der Service ist durch identische Korotrondrahteinschübe in dem Drucker oder Kopierer sowie in verschiedenen Druckern und Kopierern stark vereinfacht und die Lagerhaltung ist verringert.

Bei einem Ausführungsbeispiel der Erfindung ist an jedem Korotrondrahteinschub mindestens ein Verteilelement angebracht. Dieses Verteilelement dient einerseits als mechanisches Betätigungselement zum Hantieren des Korotrondrahteinschubs und andererseits als isolierter elektrischer Steckverbinder zum Verbinden der Spannungsversorgungseinheit mit dem Korotrondraht. Der Steckverbinder ist an der Spannungsversorgungseinheit und/oder an dem Verteilelement beweglich angeordnet. Eine bevorzugte Möglichkeit ist es, den Steckverbinder federnd zu lagern. Dadurch wird erreicht, daß der Korotrondrahteinschub nicht fest mit dem Träger verbunden ist. Die Selbstjustage des Korotrondrahteinschubs ist durch den Steckverbinder nicht behindert.

Bei einer anderen vorteilhaften Weiterbildung der Erfindung besteht der Träger aus einem isolierenden Kunststoff und hat einen H-förmigen Querschnitt. In der ersten rechteckigen Aussparung des H-förmigen Profils ist die Spannungsversorgungseinheit und in der zweiten rechteckigen Aussparung der Korotrondrahteinschub angeordnet. Dabei ist die zweite rechtekkige Aussparung dem Trägermaterial zugewandt. Durch diese Maßnahmen wird erreicht, daß eine Anordnung der einzelnen Elemente der Korotroneinrichtung in kompakter Form möglich ist. Weiterhin ist durch diese Anordnung die Wirkung der inhomogenen elektrischen Streufelder der Spannungsversorgungseinheit und der Leitungen auf das Trägermaterial und auf das gesamte Umfeld gering. Auch treten bei großen Entfernungen zwischen Spannungsversorgungseinheit und Korotrondrahteinschub Leitungsverluste auf, die eine größere Dimensionierung der Spannungsversorgungseinheit erfordern und somit zu größeren Streufeldern führen.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert. Es zeigen:
- Figur 1: einen Schwenkträger mit zwei Korotronanordnungen, wobei in einer Korotronanordnung ein Korotrondrahteinschub installiert ist,
- Figur 2: ein Ausschnitt des in Figur 1 dargestellten Schwenkträgers mit der Korotronanordnung ohne Korotrondrahteinschub,
- Figur 3: einen Schnitt durch die Korotronanordnung, einen Träger, die Spannungsversorgungseinheit und das Fotoleiterband,
- Figur 4: den Korotrondrahteinschub mit Bruchlinien als Teilansicht,
- Figur 5: das Verteilelement im Vollschnitt,
- Figur 6: das Verteilelement des Korotrondrahteinschubs aus Figur 4 und 5 in einer um 90° gedrehten Ansicht,
- Figur 7: das Aluminiumstrangprofil des Korotrondrahteinschubs mit dem Bandauflageelement als Auflager in einer Teilansicht,
- Figur 8: die Teilansicht des Aluminiumstrangprofils aus Figur 7 in einer um 90° gedrehten Ansicht dieser Anordnung,
- Figur 9: den Korotrondraht in dem Halteelement in einer teilgeschnittenen Darstellung sowie eine um 90° gedrehte Ansicht dieser Anordnung,
- Figur 10: den Korotrondraht mit den Endstücken aus Figur 9 in einer ungeschnittenen Darstellung mit dem geschnitten dargestellten, vom Korotrondraht getrennten Halteelement sowie eine um 90° gedrehte Ansicht dieser Anordnung,
- Figur 11: den Korotrondrahteinschub und den Korotrondraht in dem Halteelement,
- Figur 12: den Korotrondrahteinschub mit dem eingesetzten Korotrondraht sowie das Halteelement aus Figur 11,
- Figur 13: eine perspektivische Teilansicht der Korotronanordnung in Betriebslage,
- Figur 14: eine perspektivische Teilansicht der Korotronanordnung in Wartungsposition,
- Figur 15: eine Teilansicht der Korotronanordnung in Betriebslage, und
- Figur 16: eine Teilansicht der Korotronanordnung in Wartungsposition.

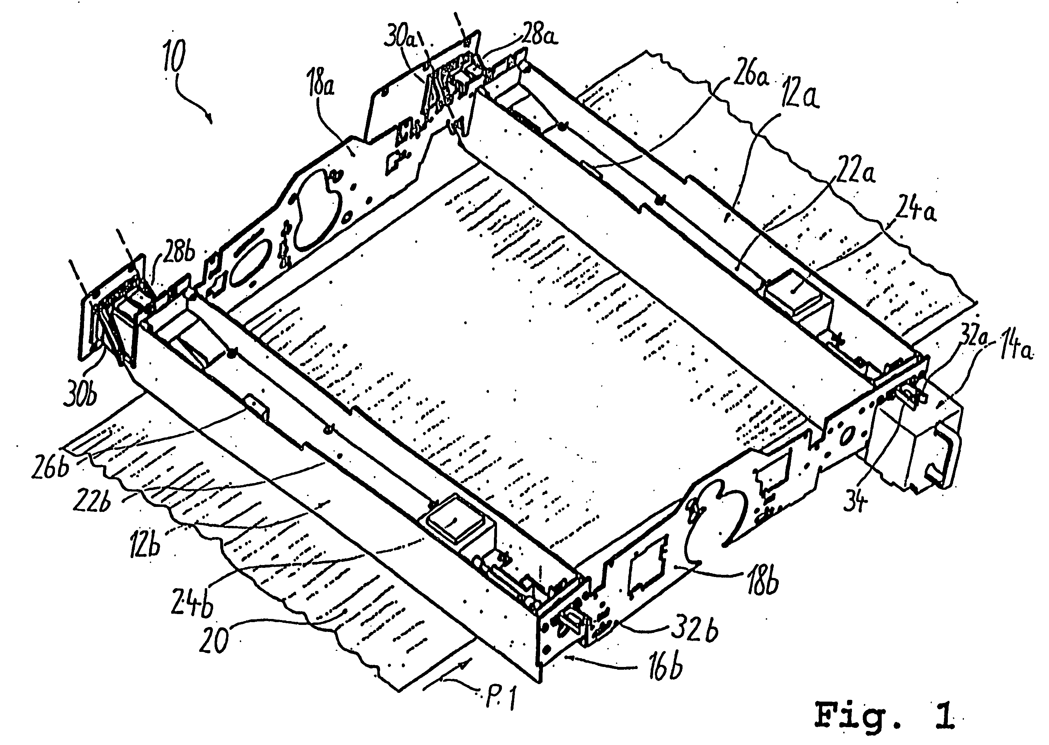

In Figur 1 ist ein Schwenkträger 10 mit zwei Korotronanordnungen 12a, 12b dargestellt, wobei in der Korotronanordnung 12a ein Korotrondrahteinschub 14a installiert ist. Ebenso kann in der Korotronanordnung 12b ein gleichartiger Korotrondrahteinschub 14b (nicht dargestellt) angeordnet werden. Die Korotronanordnungen 12a und 12b einschließlich der Korotrondrahteinschübe 14a, 14b sind identisch aufgebaut. Elemente, die für einen Korotrondrahteinschub 14a, 14b oder eine Korotronanordnung 12a, 12b beschrieben und/oder in den Figuren dargestellt sind gelten jeweils für beide Anordnungen.

An der Korotronanordnung 12b ist ein Einschubplatz 16b für einen Korotrondrahteinschub 14b vorgesehen. Die Korotronanordnungen 12a, 12b sind über Schwenkträgerplatinen 18a, 18b miteinander verbunden, die auch dafür vorgesehen sind, andere Elemente, wie z.B. Zeichengeneratoren, Reinigungseinheiten oder weitere Korotronanordnungen aufzunehmen. Das Trägermaterial, in diesem Ausführungsbeispiel ein Fotoleiterband 20, für ein latentes Bild wird aus dieser Perspektive unter dem Schwenkträger 10 in Richtung des Pfeils P1 vorbeigeführt. Der Schwenkträger 10 kann in einer beliebigen Lage im Drucker oder Kopierer angeordnet sein.

In den Korotronanordnungen 12a, 12b sind oberhalb der Korotrondrahteinschübe 14a, 14b die Spannungsversorgungseinheiten 22a, 22b angeordnet, die jeweils ein erstes Netzteil 24a, 24b zum Erzeugen der Korotrondrahtspannung und jeweils ein zweites Netzteil 26a, 26b zum Erzeugen einer an den Reflektor anzulegenden Reflektorspannung enthalten. An einem Ende jeder Korotronanordnung 12a, 12b sind Verbindungselemente 28a, 28b angeordnet, durch die das in den Korotronanordnungen 12a, 12b entstehende Ozon über Kanäle einer Ozonvernichtungseinheit zugeführt wird. Die Verbindungselemente 28a, 28b sind fest mit den Korotronanordnungen 12a, 12b verbunden. Zwei weitere Verbindungselemente 30a, 30b sind mit dem Gestell des Drukkers oder Kopierers fest verbunden. Die Verbindungselemente 28a, 28b, 30a, 30b weisen an ihren Berührungsflächen Schrägen mit einem Winkel von 45° auf, wodurch eine einfache Anpassung des Kanalübergangs der Verbindungselemente 28a, 28b, 30a, 30b an die Position des Schwenkträgers 10 bzw. an die Position der Korotronanordnungen 12a, 12b möglich ist.

An den Korotronanordnungen 12a, 12b sind Halteklammern 32a, 32b vorgesehen, die jeweils einen Arretierungszapfen 34 umschließen, der an dem Korotrondrahteinschub 14a, 14b fest angeordnet ist. Mithilfe der Halteklammern 32a, 32b wird ein Herausziehen der jeweiligen Korotrondrahteinheit 14a, 14b erschwert, wodurch eine ausreichende Befestigung der jeweiligen Korotrondrahteinheit 14a, 14b in der betreffenden Korotronanordnung 12a, 12b gewährleistet.

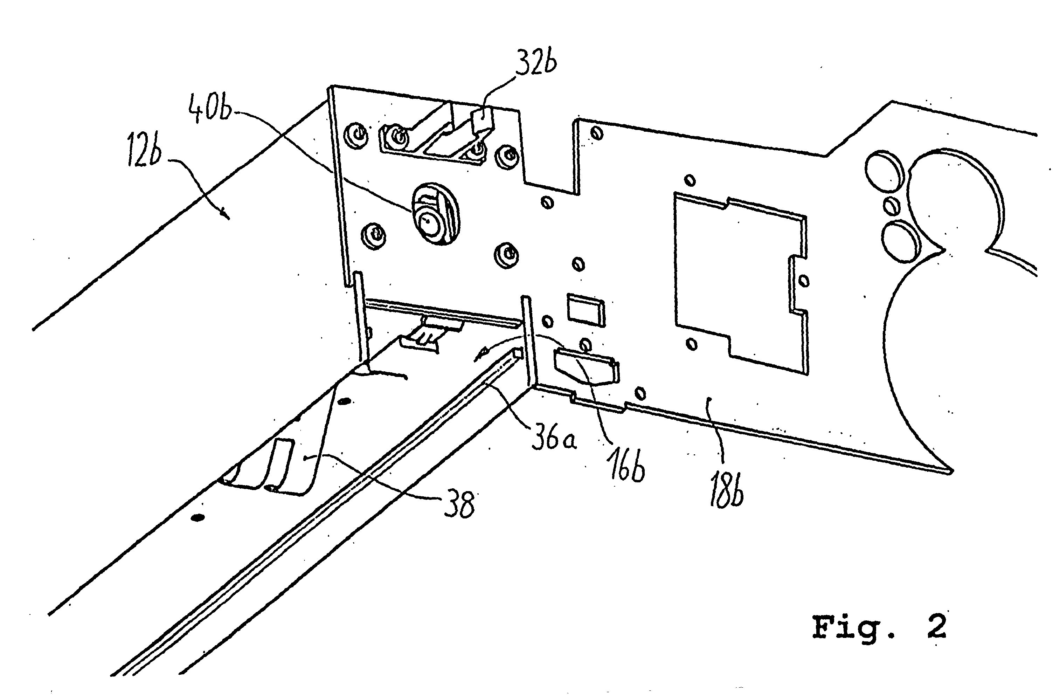

In Figur 2 ist ein Ausschnitt des in Figur 1 dargestellten Schwenkträgers 10 mit der Korotronanordnung 12b ohne Korotrondrahteinschub 14b dargestellt. Gleiche Elemente haben gleiche Bezugszeichen. Wie in Figur 1 beschrieben ist die Korotronanordnung 12b mit der Schwenkträgerplatine 18b verbunden. In dem Einschubplatz 16b für den Korotrondrahteinschub 14b sind zwei einander gegenüberliegende Führungsschienen 36a und 36b angeordnet. In dieser Figur ist nur eine Führungsschiene 36a sichtbar. In der Korotronanordnung 12b sind ferner mehrere Blattfedern 38 angeordnet, die eine Kraft in Richtung des Fotoleiterbandes 20 auf den Korotrondrahteinschub 14b im eingebauten Zustand ausüben. Dabei stellen sie zu den Reflektoren (die weiter unten noch beschrieben werden) des Korotrondrahteinschubs 14b auch elektrisch leitende Verbindungen her. An der gezeigten Korotronanordnung 12b ist ferner eine vertikal bewegliche Buchse 40b vorgesehen, über die die Spannung für die Korotrondrähte zugeführt wird.

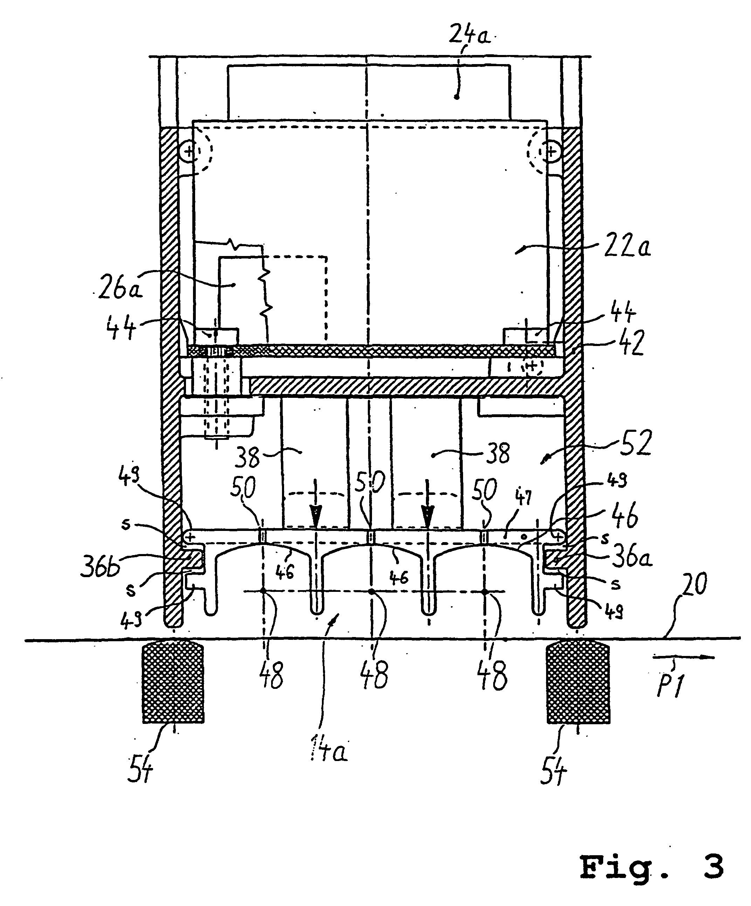

In Figur 3 ist ein Schnitt durch die Korotronanordnung 12a, einen Träger 42, die Spannungsversorgungseinheit 22a und das Fotoleiterband 20 dargestellt. Der Träger 42 hat einen H-förmigen Querschnitt in dessen oberer rechteckiger Aussparung die Spannungsversorgungseinheit 22a mit dem ersten Netzteil 24a und dem zweiten Netzteil 26a angeordnet ist. Die Spannungsversorgungseinheit 22a ist mittels Schrauben 44 am Träger 42 befestigt. Der Korotrondrahteinschub 14a wird von den zwei einander gegenüberliegenden Führungsschienen 36a, 36b, die in der unteren rechteckigen Aussparung des H-förmigen Trägerquerschnitts 42 angeordnet sind, im Träger 42 aufgenommen. Die Führungsschienen 36a, 36b sind fest mit dem Träger 42 verbunden. Die Blattfeder 38 übt mit ihren Federabschnitten eine Kraft auf die Oberseite des Korotrondrahteinschubs 14a in Richtung des Fotoleiterbandes 20 aus. Der Korotrondrahteinschub 14a hat Reflektoren 46, wobei jeder Reflektor 46 den jeweiligen Korotrondraht 48 auf drei Seiten umschließt und die offene vierte Seite der Reflektoren 46 dem Fotoleiterband 20 zugewandt ist. Die Reflektoren 46 dienen zum Abschirmen des elektrischen Feldes. Der Korotrondrahteinschub 14a hat als tragendes Bauteil ein Aluminiumstrangprofil 47, welches jeweils seitlich eine U-Form hat, deren Schenkel 49 die Führungsschiene 36a, 36b mit Spiel s umgreifen. Durch das Spiel s kann sich der Korotrondrahteinschub 14a relativ zum Träger 42 in Richtung des Fotoleiterbandes 20 bewegen, so daß dem Korotrondrahteinschub 14a unabhängig von der exakten Position des Trägers 42 die Möglichkeit gegeben ist, auf Bandauflageelementen 54 aufzusitzen bzw. durch die Federkraft der Blattfeder 38 auf die Bandauflageelemente 54 gedrückt zu werden.

Auf der dem Fotoleiterband 20 gegenüberliegenden Seite der Reflektoren 46 sind Schlitze 50 zum Absaugen des Ozons vorhanden. Das Ozon wird in dem durch den Korotrondrahteinschub 14a und durch den Träger 42 gebildeten Kanal 52 abgesaugt und einer Ozonvernichtungseinheit zugeführt.

Das Fotoleiterband 20 wird von den Bandauflageelementen 54 geführt, die auf der der Korotrondrähten 48 abgewandten Seite des Fotoleiterbandes 20 angeordnet sind. Die Reflektoren 46 haben eine korrosionsbeständige Oberfläche, die vorzugsweise hartverchromt ist. Vorzugsweise ist das gesamte Aluminiumstrangprofil 47 hartverchromt.

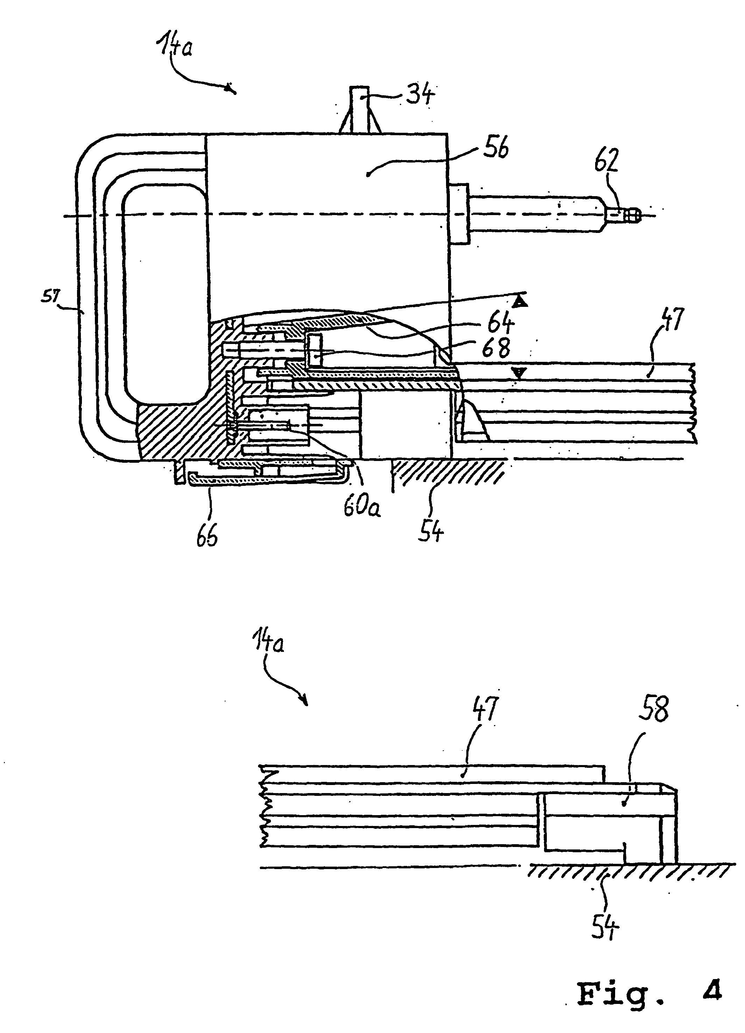

In Figur 4 ist der Korotrondrahteinschub 14a mit Bruchlinien als Teilschnitt dargestellt. Ein auf einer Seite vorgesehenes Verteilelement 56 hat einem Handgriff 57 und ist über das Aluminiumstrangprofil 47 mit einem Stützelement 58 verbunden. Das Verteilelement 56 und das Stützelement 58 liegen auf Abschnitten der Bandauflageelemente 54 auf, die beiderseits über die Breite des Fotoleiterbandes 20 überstehen. Diese Bandauflageelemente 54 bilden die Auflager für das Verteilelement 56 und das Stützelement 58. Die Längsachse des Korotrondrahtes 48 ist somit stets in einer parallelen Ebene zum Fotoleiterband 20 ausgerichtet.

Im Verteilelement 56 sind drei Kontaktstifte 60a, 60b, 60c angeordnet, die eine elektrisch leitende Verbindung zu den drei Korotrondrähten 48 des Korotrondrahteinschubs 14a herstellen. Im Verteilelement 56 sind die Kontaktstifte 60a, 60b, 60c elektrisch leitend mit einem Kontaktstift 62 verbunden, der eine elektrisch leitende Verbindung zu der Spannungsversorgungseinheit 24a herstellt. In dieser Figur 4 ist nur ein Kontaktstift 60a dargestellt. Die Verbindung erfolgt vorzugsweise durch Litzen oder durch eine Platte im Verteilelement 56. Die in dieser Figur 4 nicht dargestellte Buchse 40a zur Aufnahme des Kontaktstifts 62 ist auf der Spannungsversorgungseinheit 22a beweglich angeordnet, so daß eine relative Bewegung zwischen Korotrondrahteinschub 14a und dem Träger 42, mit dem die Spannungsversorgungseinheit 22a fest verbunden ist, möglich ist. Eine solche Anordnung wird auch als fliegender Stecker bezeichnet. Durch den Arretierungszapfen 34 ist der gesamte Korotrondrahteinschub 14a in einer Position zum Träger 42 mit Hilfe der Halteklammer 32a fixiert, wobei eine Bewegung des Korotrondrahteinschubs 14a in Richtung des Fotoleiterbandes 20 möglich ist. Das Aluminiumstrangprofil 47 ist mittels eines Keils 64 und eines Befestigungselements 68 mit dem Verteilelement 56 verbunden. Die Korotrondrähte 48 sind durch eine Arretierungseinrichtung 66 in dem Verteilelement 56 und somit in dem Korotrondrahteinschub 14a fixiert.

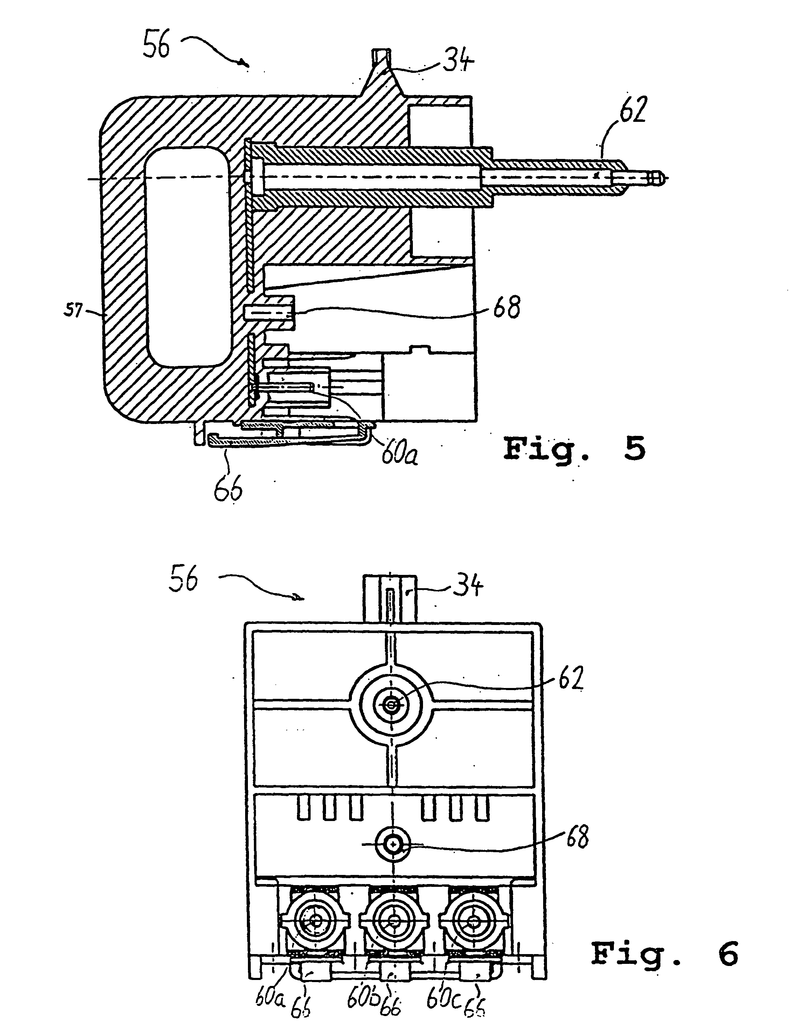

In Figur 5 ist das Verteilelement 56 im Vollschnitt dargestellt. Mit Hilfe des Befestigungselements 68 wird das Aluminiumstrangprofil 47 mit dem Verteilelement 56 verbunden.

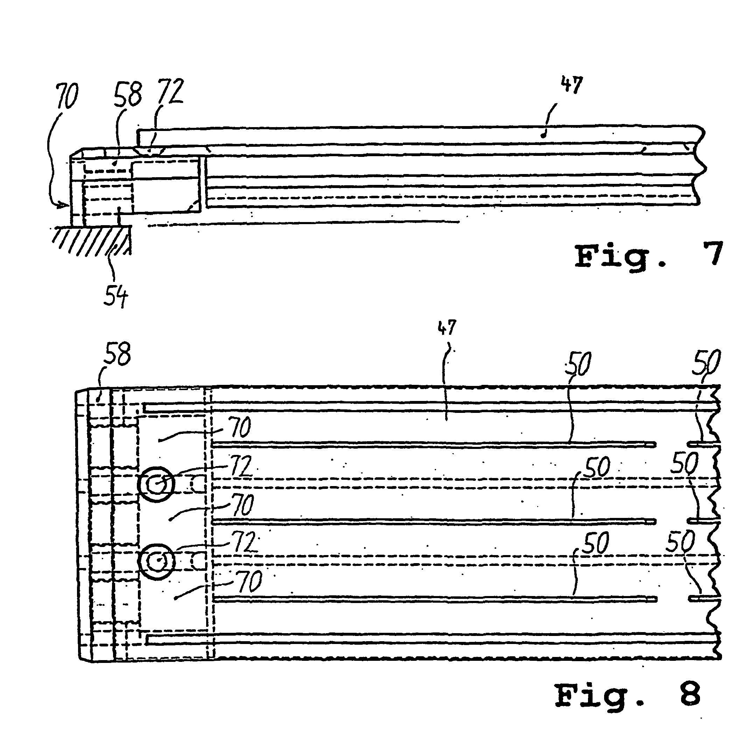

In Figur 6 ist das Verteilelement 56 des Korotrondrahteinschubs 14a aus Figur 4 und 5 in einer um 90° gedrehten Ansicht dargestellt. Die Aussparungen, die die drei Kontaktstifte 60a, 60b, 60c im Verteilelement 56 aufnehmen, dienen auch zur Aufnahme von Endstücken der drei Korotrondrähte 48.

In Figur 7 ist das Aluminiumstrangprofil 47 des Korotrondrahteinschubs 14a mit dem Bandauflageelement 54 als Auflager dargestellt. Das Stützelement 58 des Korotrondrahteinschubs 14a ist fest mit dem Aluminiumstrangprofil 47 verbunden. Es besteht aus einem isolierenden Material, z.B. aus einem isolierenden Kunststoff. In dem Stützelement 58 ist jeweils ein Ende der Korotrondrähte 48 gehalten. Das Aluminiumstrangprofil 47 ist mit dem Stützelement 58 durch Befestigungselemente 72 verbunden.

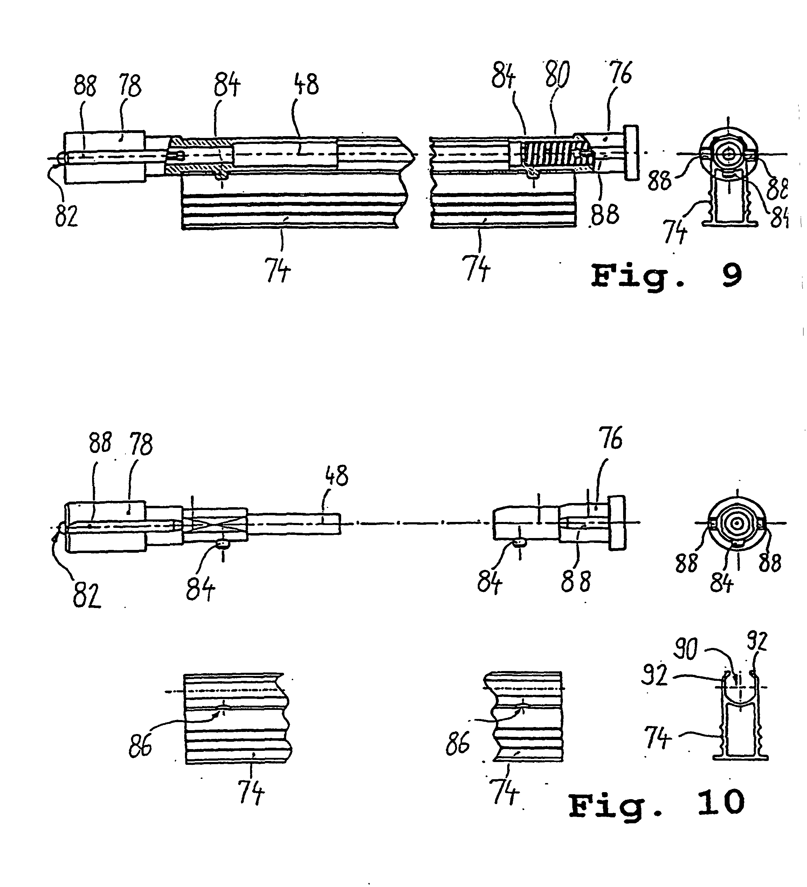

In Figur 8 ist das Aluminiumstrangprofil 47 aus Figur 7 in einer um 90° gedrehten Ansicht dargestellt. Durch die Schlitze 50 wird das Ozon abgesaugt. Öffnungen 70 in dem Stützelement 58 dienen zur Aufnahme der Endbuchsen der Korotrondrähte 48.

In Figur 9 ist der Korotrondraht 48 in einem Halteelement 74 sowie eine um 90° gedrehten Ansicht dieser Anordnung dargestellt. Der Korotrondraht 48 und das Halteelement 74 sind bei dieser Darstellung teilweise geschnitten. An beiden Enden des Korotrondrahtes 48 ist jeweils ein Endstück 76, 78 angebracht. Der Korotrondraht 48 ist glasummantelt und bildet mit den Endstücken 76, 78 eine Einheit. Das Endstück 78 hat eine Buchse 82, über die der in dieser Figur 9 nicht dargestellte Kontaktstift 60a des Verteilelements 56 eine elektrisch leitende Verbindung zu dem Korotrondraht 48 herstellt. Im Inneren des Endstücks 76 ist eine Feder 80, die den Korotrondraht 48 unter einer konstanten mechanischen Spannung hält. An den Endstücken 76, 78 ist je ein Zapfen 84 angebracht, der in jeweils eine Öffnung (in Figur 10 näher erläutert) des Halteelements 74 greift. Weiterhin sind an jedem Endstück 76, 78 zwei Führungselemente 88 angeordnet, die den Korotrondraht 48 im Verteilelement 56 und in den Öffnungen 70 des Stützelements 58 führen.

In Figur 10 ist der Korotrondraht 48 mit den Endstücken 76, 78 aus Figur 9 in einer ungeschnittenen Darstellung mit dem geschnitten dargestellten, vom Korotrondraht 48 getrennten Halteelement 74 sowie eine um 90° gedrehten Ansicht dieser Anordnung dargestellt. Das Halteelement 74 besteht aus einem Kunststoffziehprofil mit einer Öffnung 90 zum Aufnehmen des Korotrondrahtes 48. Die Öffnung 90 ist von zwei gewölbten Schenkeln 92 gebildet, die den Korotrondraht 48 beim Aufnehmen im Halteelement 74 teilweise umschließen. Die gewölbten Schenkel 92 bilden federnde Elemente, die den Korotrondraht 48 in dem Halteelement 74 fixieren.

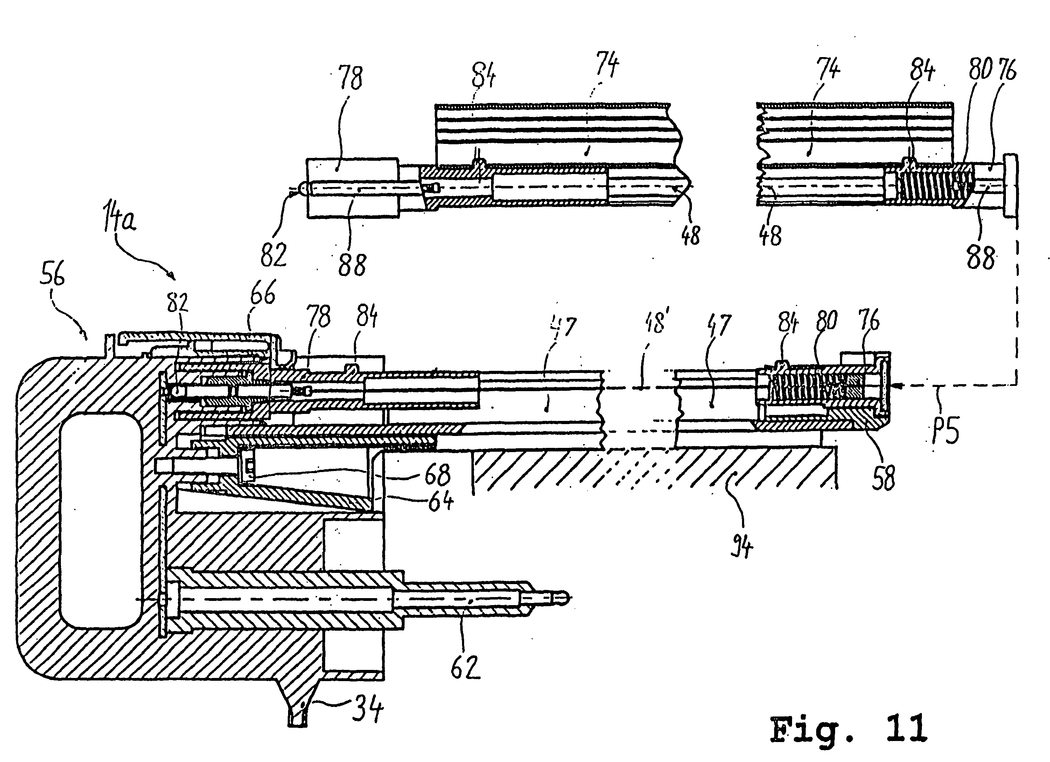

In Figur 11 ist der Korotrondrahteinschub 14a und der Korotrondraht 48 in dem Halteelement 74 dargestellt. Der Korotrondrahteinschub 14a ist aus dem Drucker oder Kopierer ausgebaut und befindet sich zur Montage der Korotrondrähte 48 auf einem Montagetisch 94, so daß die Korotrondrähte 48 für eine Bedienperson sichtbar und gut zugänglich sind. Durch den Pfeil P5 ist der Einsetzvorgang des Korotrondrahtes 48 in den Korotrondrahteinschub 14a angedeutet. Zum Einsetzen in den Korotrondrahteinschub 14a befindet sich der einzusetzende Korotrondraht 48 mit den Endstücken 76, 78 in der Haltevorrichtung 74, wobei die Zapfen 84 die Endstücke 76, 78 des Korotrondrahtes 48 in dem Halteelement 74 fixieren. Mit dem Halteelement 74 wird der fixierte Korotrondraht 48 entlang der Linie des Pfeils P5 in den Korotrondrahteinschub 14a eingeführt, bis der Korotrondraht 48' mit seinen Endstücken 76', 78' durch das Arretierungselement 66 in dem Korotrondrahteinschub 14a fixiert ist. Nach dem Fixieren des Korotrondrahtes 48' in dem Korotrondrahteinschub 14a wird das Halteelement 74 nach oben aus dem Korotrondrahteinschub 14a entfernt. Der Korotrondraht 48' ist betriebsfertig eingesetzt. Durch die Form des Aluminiumstrangprofils 47 und der dadurch gegebenen freien Zugänglichkeit läßt sich das Aluminiumstrangprofil 47 mit den Reflektoren 46 beim Austausch der Korotrondrähte 48 leicht reinigen.

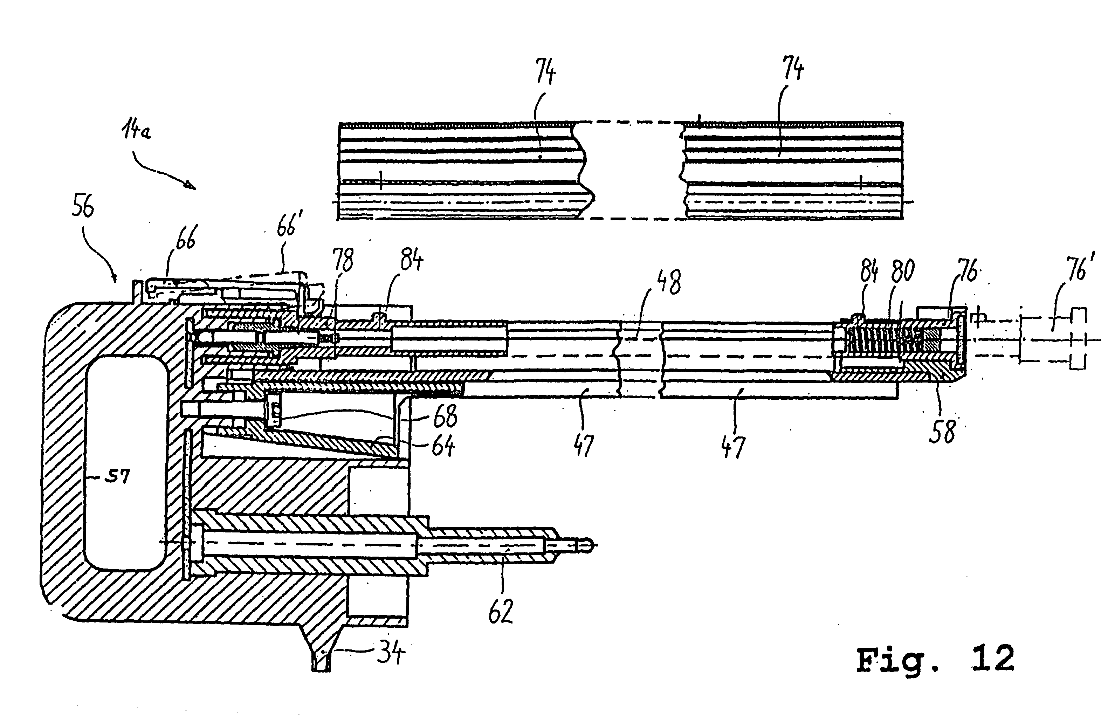

In Figur 12 ist der Korotrondrahteinschub 14a mit dem eingesetzten Korotrondraht 48 sowie das Halteelement 74 aus Figur 11 dargestellt. In dieser Figur ist gezeigt, wie der Korotrondraht 48 in den Korotrondrahteinschub 14a eingesetzt bzw. ausgebaut wird. Dazu wird der Korotrondraht 48 in dem Halteelement 74 mit einem Versatz zum Verteilelement 56 parallel zum Aluminiumstrangprofil 47 in die Öffnung 70 des Stützelements 58 entlang des in Figur 11 gezeigten Pfeils P5 eingeführt. Das Endstück 76 des Korotrondrahtes 48 nimmt dabei die Position 76' ein. Anschließend wird das Halteelement 74 zusammen mit dem Korotrondraht 48 und dessen Endstücken 76, 78 in Richtung Verteilelement 56 geschoben, wobei der Kontaktstift 60a (nicht dargestellt) in die Buchse 82 des Endstücks 78 eingeführt wird. Das Arretierungselement 66 wird beim Einführen des Korotrondrahtes 48 in die Korotrondrahteinheit 14a durch das Endstück 78 in die Position 66' ausgelenkt und arretiert den Korotrondraht 48 anschließend in der Endlage 66. Vorzugsweise wird das Arretierungselement 66 durch ein Federelement in seiner Endlage gehalten. Anschließend wird das Halteelement 74 vom Korotrondraht 48 entfernt. Zum Ausbauen des Korotrondrahtes 48 wird das Halteelement 74 auf den Korotrondraht 48 geschoben, so daß die gewölbten Schenkel 92 des Halteelements 74 den Korotrondraht 48 teilweise umschließen und die Zapfen 84 der Endstücke 76, 78 den Korotrondraht 48 im Halteelement 74 fixieren. Anschließend wird das Arretierungselement 66 in die Position 66' gebracht, das Halteelement 74 wird mit dem Korotrondraht 48 parallel zum Aluminiumstrangprofil 47 in Richtung Stützelement 58 bis in die Position 76' des Endstücks 76 geschoben und anschließend aus der Korotrondrahteinheit 14a entfernt.

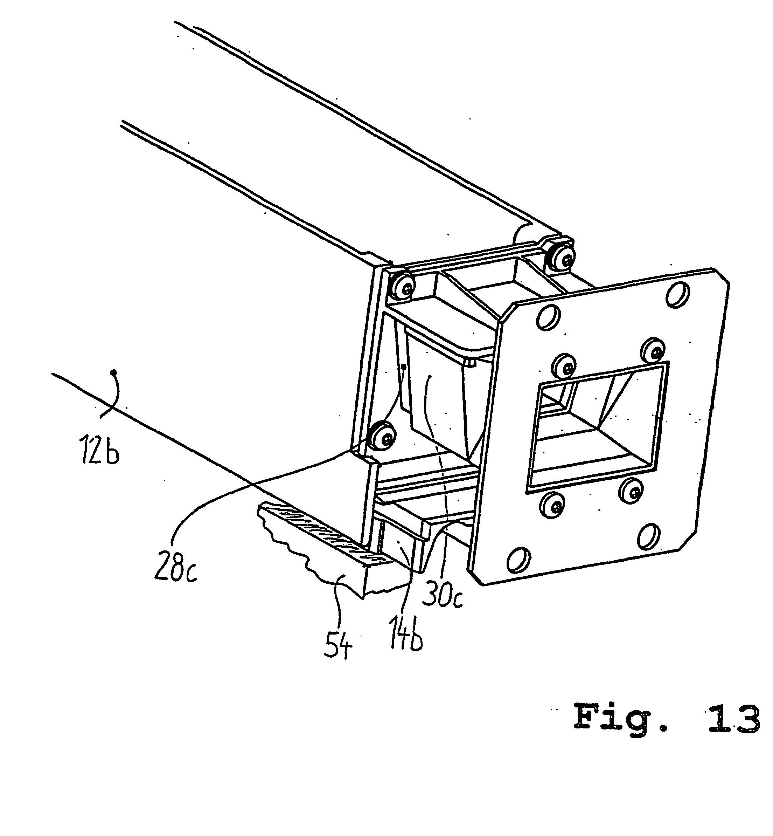

In Figur 13 ist eine perspektivische Teilansicht der Korotronanordnung in Betriebslage dargestellt. Der in der Korotronanordnung 12b angeordnete Korotrondrahteinschub 14b sitzt auf dem Auflageelement 54 auf, das den Korotrondrahteinschub 14b gegenüber dem in dieser Figur 13 nicht dargestellten Fotoleiterband 20 in einer parallelen Ebene ausrichtet. Die Korotronanordnung 12b mit dem Korotrondrahteinschub 14b befindet sich in Betriebslage, d.h. der Korotrondrahteinschub 14b ist durch die Auflageelemente 54 in einem korrekten Abstand parallel zum Fotoleiterband 20 ausgerichtet.

Weiterhin ist ein Verbindungselement 28c mit der Korotronanordnung 12b und ein zweites Verbindungselement 30c mit dem Gehäuse des Druckers und/oder Kopierers fest verbunden. Die Verbindungselemente 28c und 30c ersetzen in dieser Ausführungsvariante die in Figur 1 dargestellten Verbindungselemente 28a, 28b, 30a, 30b, wobei die Verbindungselemente 28a, 28b durch je ein Verbindungselement 28c und die Verbindungselemente 30a, 30b durch je ein Verbindungselement 30c ersetzt sind. Die Verbindungselemente 28c und 30c haben einen symmetrischen trapezförmigen Querschnitt, wobei die nach unten zeigenden Außenflächen des Verbindungselements 28c mit den nach oben zeigenden Innenflächen des Verbindungselements 30c Dichtflächen ausbilden, die durch überlappendes Berühren eine dichte Anordnung bilden. Das in der Korotronanordnung 12b entstehende Ozon-Luftgemisch wird über die durch die von den Verbindungselementen 28c, 30c geschaffenen Verbindung abgesaugt und einer Ozonvernichtungseinheit zugeführt. Eine Gefährdung von Personen durch austretendes Ozon ist somit zuverlässig verhindert.

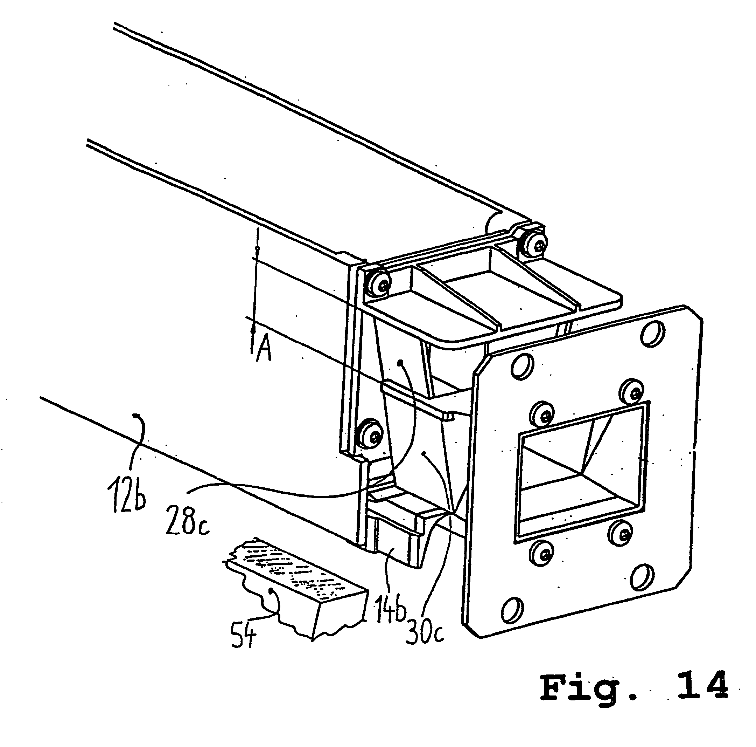

In Figur 14 ist eine perspektivische Teilansicht der Korotronanordnung aus Figur 13 in Wartungsposition dargestellt. Die Korotrondrahteinheit 12b ist in der Wartungsposition zusammen mit dem Korotrondrahteinschub 14b um den Abstand A von den Auflageelementen 54 abgehoben. Dazu werden alle mit den Schwenkträgerplatinen 18a, 18b verbundenen Elemente und Anordnungen (siehe Figur 1) über ein nicht dargestelltes Hebelsystem vom Fotoleiterband 20 wegbewegt. Das Hebelsystem ist nur bei geöffnetem Drucker- oder Kopierergehäuse zugänglich. Das Abheben dient vor allem dazu, bei Wartungsarbeiten den Zugang bzw. die Montagefreiheit für die an den Schwenkträgerplatinen 18a, 18b angeordneten Elemente und für das Fotoleiterband 20 zu gewährleisten. Durch das Abheben berühren sich die Dichtflächen der Verbindungselemente 28c, 30c nicht mehr und können gegeneinander frei bewegt werden. Beim Absenken der Korotronanordnung 12b berühren sich die Dichtflächen der Verbindungselemente 28c und 30c wieder, so daß der Kanal 52 der Korotronanordnung 12b zum Absaugen des Ozons durch die Verbindungselemente 28c, 30c wieder dicht mit der Ozonvernichtungseinheit verbunden ist.

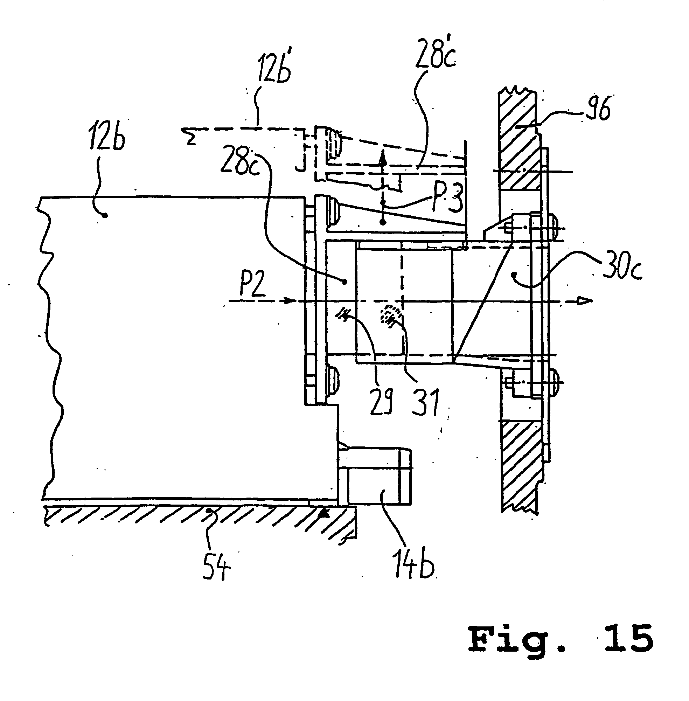

In Figur 15 ist eine Teilansicht der Korotronanordnung in Betriebslage dargestellt. Das Verbindungselement 30c ist dabei mit dem Drucker- oder Kopierergehäuse 96 fest verbunden. Die Außenseite des Verbindungselements 28c bildet eine Dichtfläche 29 und die Innenseite des Verbindungselementes 30c bildet eine Dichtfläche 31. Wenn sich die Dichtflächen 29, 30 überlappend berühren, ermöglichen sie eine dichte Verbindung zwischen der Korotronanordnung 12b der Ozonvernichtungseinheit. Die Ozonvernichtungseinheit saugt das in der Korotronanordnung 12b entstehende Ozon- Luftgemisch in Pfeilrichtung des Pfeils P2 ab. Wenn die Korotronanordnung 12b, wie in der Figur 14 beschrieben, in die Wartungsposition angehoben wird, wobei die Korotronanordnung 12b mit dem Verbindungselement 28c in Pfeilrichtung des Pfeils P2 bewegt wird, nehmen die Korotronanordnung und das Verbindungselement die Positionen 12b' und 28c' ein.

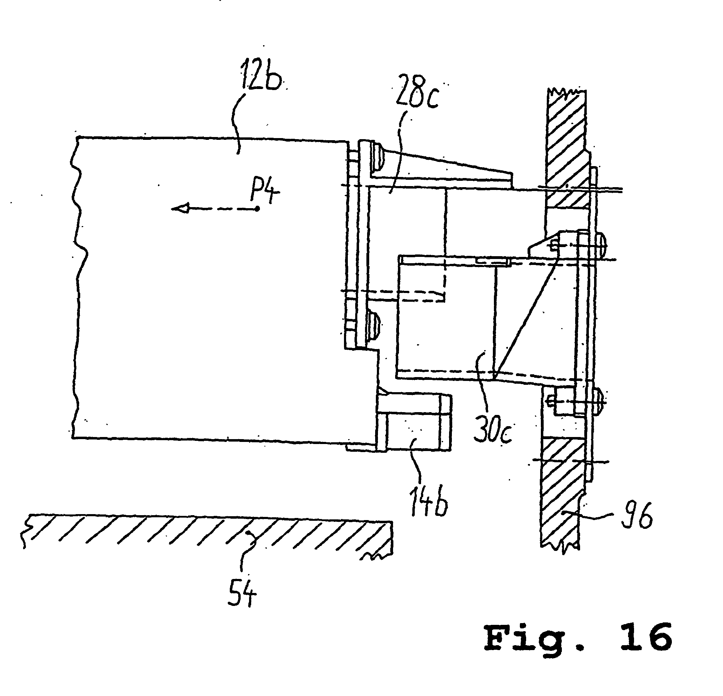

In Figur 16 ist eine Teilansicht der Korotronanordnung in Wartungsposition dargestellt. Der Pfeil P4 deutet eine zusätzliche Bewegungsmöglichkeit der Korotronanordnung 12b an, die in der Wartungsposition gegeben ist.

### Bezugszeichenliste

- 10: Schwenkträger
- 12a: Korotronanordnung
- 12b: Korotronanordnung
- 14a: Korotrondrahteinschub
- 14b: Korotrondrahteinschub
- 16a: Einschubplatz für Korotrondrahteinschub
- 16b: Einschubplatz für Korotrondrahteinschub
- 18a: Schwenkträgerplatine
- 18b: Schwenkträgerplatine
- 20: Fotoleiterband
- 22a: Spannungsversorgungseinheit
- 22b: Spannungsversorgungseinheit
- 24a: Netzteil zum Erzeugen der Korotronspannung
- 24b: Netzteil zum Erzeugen der Korotronspannung
- 26a: Netzteil zum Erzeugen der Schirmspannung
- 26b: Netzteil zum Erzeugen der Schirmspannung
- 28a: Verbindungselement Ozonabsaugung
- 28b: Verbindungselement Ozonabsaugung
- 28c: Verbindungselement Ozonabsaugung
- 29: Dichtfläche
- 30a: Verbindungselement Ozonabsaugung
- 30b: Verbindungselement Ozonabsaugung
- 30c: Verbindungselement Ozonabsaugung
- 31: Dichtfläche
- 32a: Halteklammer für Korotrondrahteinschub
- 32b: Halteklammer für Korotrondrahteinschub
- 34: Arretierungszapfen
- 36a: Führungsschiene für Korotrondrahteinschub
- 36b: Führungsschiene für Korotrondrahteinschub
- 38: Blattfeder
- 40a: Buchse Spannungsversorgungseinheit
- 40b: Buchse Spannungsversorgungseinheit.
- 42: Träger mit H-förmigen Querschnitt
- 44: Schrauben
- 46: Reflektor
- 47: Aluminiumstrangprofil
- 48: Korotrondraht
- 49: Schenkel
- 50: Schlitze zur Ozonabsaugung
- 52: Kanal zur Ozonabsaugung
- 54: Bandauflageelement
- 56: Verteilelement
- 58: Stützelement des Korotrondrahteinschubs
- 60a: Kontaktstift für Korotrondraht
- 60b: Kontaktstift für Korotrondraht
- 60c: Kontaktstift für Korotrondraht
- 62: Kontaktstift Spannungsversorgung
- 64: Keil zum Befestigen des Reflektors
- 66: Arretierungselement zur Drahtverriegelung
- 68: Befestigungselement
- 70: Öffnungen des Stützelements
- 72: Befestigungselement
- 74: Halteelement
- 76: Endstück Korotrondraht
- 78: Endstück Korotrondraht
- 80: Feder
- 82: Buchse
- 84: Zapfen
- 86: Öffnung für Zapfen
- 88: Führungselemente
- 90: Öffnung für Korotrondraht
- 92: gewölbte Schenkel des Halteelements
- 94: Auflage Montagetisch
- 96: Gestell
- P1: Pfeil zur Laufrichtungsangabe des Fotoleiterbandes
- P2: Absaugrichtung des Ozon-Luftgemischs
- P3: Bewegungsrichtung in Wartungsposition
- P4: Bewegungsmöglichkeit bei Wartungsposition
- P5: Pfeil zum Einführen des Korotrondrahtes
- A: Abstand Wartungsposition zur Betriebslage
- s: Spiel

## Patentansprüche

1. Anordnung für ein Korotron für elektrographische Prozesse, insbesondere in einem Drucker oder Kopierer,
mit einem Träger (42), in dem ein mit einer elektrischen Hochspannung versorgter Korotrondraht (48) angeordnet ist,
und mit mindestens einer Spannungsversorgungseinheit (22a, 22b), die die Hochspannung erzeugt,
wobei der Träger (42) die Spannungsversorgungseinheit (22a, 22b) aufnimmt, **dadurch gekennzeichnet, dass** der Korotrondraht (48) im Träger (42) in einem Korotrondrahteinschub (14a, 14b) angeordnet ist,
dass eine elektrische Verbindung zwischen der Spannungsversorgungseinheit (22a, 22b) und dem Korotrondrahteinschub (14a, 14b) mindestens einen Steckverbinder (40a, 40b, 62) enthält, der beweglich angeordnet ist, so dass der Korotrondrahteinschub (14a, 14b) in verbundenem Zustand des Steckverbinders im Träger (42) bewegbar ist.

2. Anordnung nach Anspruch 1, **dadurch gekennzeichnet, dass** in dem Korotrondrahteinschub (14a, 14b) drei Korotrondrähte (48) angeordnet sind.

3. Anordnung nach einem der Ansprüche 1 oder 2, **dadurch gekennzeichnet, dass** die Spannungsversorgungseinheit (22a, 22b) längs des Korotrondrahteinschubs (14a, 14b) angeordnet ist.

4. Anordnung nach einem der vorhergehenden Ansprüche, **dadurch gekennzeichnet, dass** der Korotrondrahteinschub (14a, 14b) ein Reflektorelement (46) enthält, wobei das Reflektorelement (46) mit der Spannungsversorgungseinheit (22a, 22b) elektrisch verbunden ist.

5. Anordnung nach Anspruch 4, **dadurch gekennzeichnet, dass** das Reflektorelement (46) aus einem Aluminiumstrangprofil besteht, das vorzugsweise hartverchromt ist.

6. Anordnung nach einem der vorhergehenden Ansprüche, **dadurch gekennzeichnet, dass** der Korotrondrahteinschub (14a, 14b) in Führungselementen (36a, 36b) geführt ist, und dass die Führungselemente (36a, 36b) und der Korotrondrahteinschub (14a, 14b) ein Spiel (S) in Richtung einer parallelen Ebene zu den Korotrondrähten (48) haben.

7. Anordnung nach einem der vorhergehenden Ansprüche, **dadurch gekennzeichnet, dass** eine Federkraft von mindestens einer Feder (38) auf den Korotrondrahteinschub (14a, 14b) wirkt.

8. Anordnung nach Anspruch 7, **dadurch gekennzeichnet, dass** die Feder (38) das Reflektorelement (46) elektrisch mit der Spannungsversorgungseinheit (22a, 22b) verbindet.

9. Anordnung nach einem der vorhergehenden Ansprüche 4, 5 und 6 bis 8 sofern abhängig von Anspruch 4, **dadurch gekennzeichnet, dass** das Reflektorelement (46) durch elektrisch isolierende Elemente (56, 58) gegenüber weiteren Elementen des Druckers oder Kopierers elektrisch isoliert angeordnet ist.

10. Anordnung nach einem der Ansprüche 4, 5 und 6 bis 9 sofern abhängig von Ansprüch 4 , **dadurch gekennzeichnet, dass** das Reflektorelement (46) Schlitze (50) enthält, durch die Gas, insbesondere ein Ozon- Luftgemisch, entweicht und/oder abgesaugt wird.

11. Anordnung nach einem der Ansprüche 4, 5 und 6 bis 10 sofern abhängig von Anspruch 4, **dadurch gekennzeichnet, dass** das Reflektorelement (46) aus einem Strangprofil besteht.

12. Anordnung nach einem der Ansprüche 10 oder 11, **dadurch gekennzeichnet, dass** ein Kanal (52) zum Absaugen des Ozon- Luftgemisches durch Verbindungselemente (28a, 28b, 28c, 30a, 30b, 30c) mit einer Ozonvernichtungseinheit verbunden ist.

13. Anordnung nach Anspruch 12, **dadurch gekennzeichnet, dass** die den Korotrondrähten (48) abgewandte Seite des Korotrondrahteinschubs (14a, 14b) und der Träger (42) den Kanal (52) bilden.

14. Anordnung nach einem der Ansprüche 12 oder 13, **dadurch gekennzeichnet, dass** die Verbindungselemente (28a, 28b, 30a, 30b) an ihren Berührungsflächen Dichtelemente haben.

15. Anordnung nach einem der Ansprüche 12 bis 14, **dadurch gekennzeichnet, dass** die Verbindungselemente (28c, 30c) Flächen haben, die einander überlappen.

16. Anordnung nach einem der Ansprüche 12 bis 15, **dadurch gekennzeichnet, dass** die Verbindungselemente (28c, 30c) einen trapezförmigen Querschnitt haben.

17. Anordnung nach einem der vorhergehenden Ansprüche, **dadurch gekennzeichnet, dass** mehrere Korotrondrahteinschübe (14a, 14b) vorgesehen sind, und dass jeder Korotrondrahteinschub (14a, 14b) von einer separaten Spannungsversorgungseinheit (22a, 22b) gespeist ist.

18. Anordnung nach einem der vorhergehenden Ansprüche sofern abhängig von Anspruch, **dadurch gekennzeichnet, dass** die Spannungsversorgungseinheit (22a, 22b) mindestens zwei Netzteile (24a, 24b, 26a, 26b) enthält, wobei ein Netzteil (24a, 24b) zur Versorgung des Korotrondrahtes und ein zweites Netzteil (26a, 26b) zur Versorgung des Reflektorelements (46) dient.

19. Anordnung nach einem der vorhergehenden Ansprüche, **dadurch gekennzeichnet, dass** der Korotrondraht (48) mit einer Spannung, vorzugsweise im Bereich von 16 bis 20kV mit einer Frequenz im Bereich von 3 bis 5kHz, versorgt ist.

20. Anordnung nach einem der Ansprüche 4, 5 und 6 bis 19 sofern abhängig von Anspruch 4, **dadurch gekennzeichnet, dass** das Reflektorelement (46) mit einer Gleichspannung, vorzugsweise in einem Bereich von 3 bis 5 kV, versorgt ist.

21. Anordnung nach einem der vorhergehenden Ansprüche, **dadurch gekennzeichnet, dass** am Korotrondrahteinschub (14a, 14b) mindestens ein Verteilelement (56) angebracht ist, das einerseits als mechanisches Betätigungselement (57) zum Hantieren des Korotrondrahteinschubs (14a,'14b) und andererseits einen Kontaktstift (62) des elektrischen Steckverbinders (40a, 40b) zum Verbinden der Spannungsversorgungseinheit (22a, 22b) mit dem Korotrondrahteinschub (14a, 14b) enthält.

22. Anordnung nach einem der vorhergehenden Ansprüche, **dadurch gekennzeichnet, dass** der Steckverbinder (40a, 40b, 62) an der Spannungsversorgungseinheit (22a, 22b) und/oder an dem Verteilelement (56) nach Anspruch 21 federnd gelagert ist.

23. Anordnung nach einem der vorhergehenden Ansprüche, **dadurch gekennzeichnet, dass** der Träger (42) aus einem isolierenden Kunststoff besteht und einen H-förmigen Querschnitt hat,
und dass in der ersten rechteckigen Aussparung des H-förmigen Trägers (42) die Spannungsversorgungseinheit (22a, 22b) und in der zweiten rechteckigen Aussparung der Korotrondrahteinschub (14a, 14b) angeordnet ist.

24. Anordnung nach einem der vorhergehenden Ansprüche, **dadurch gekennzeichnet, dass** der Korotrondrahteinschub (14a, 14b) durch Führungselemente (36a, 36b) in dem Träger (42) geführt ist und der Träger (42) in einer schwenkbaren Anordnung (10) angeordnet ist.

## Claims

1. An arrangement for a corotron for electrographic processes, in particular in a printer or copier,
comprising a carrier (42) in which a corotron wire (48) supplied with an electrical high-voltage is arranged,
and comprising at least one voltage supply unit (22a, 22b) that generates the high voltage,
the carrier (42) accepting the voltage supply unit (22a, 22b), **characterized in that** the corotron wire (48) in the carrier (42) is arranged in a corotron wire insert (14a, 14b),
**in that** an electrical connection between the voltage supply unit (22a, 22b) and the corotron wire insert (14a, 14b) contains at least one plug-type connector (40a, 40b, 62) that is movably arranged so that the corotron wire insert (14a, 14b) is movable in the carrier (42) in a connected condition of the plug-type connector.

2. The arrangement according to claim 1, **characterized in that** three corotron wires (48) are arranged in the corotron wire insert (14a, 14b).

3. The arrangement according to one of the claims 1 or 2, **characterized in that** the voltage supply unit (22a, 22b) is arranged along the corotron wire insert (14a, 14b).

4. The arrangement according to one of the preceding claims, **characterized in that** the corotron wire insert (14a, 14b) contains a reflector element (46), the reflector element (46) being electrically connected to the voltage supply unit (22a, 22b).

5. The arrangement according to claim 4, **characterized in that** the reflector element (46) comprises an extruded aluminum profile that is preferably hard-chrome plated.

6. The arrangement according to one of the preceding claims, **characterized in that** the corotron wire insert (14a, 14b) is guided in guide elements (36a, 36b), and **in that** the guide elements (36a, 36b) and the corotron wire insert (14a, 14b) have play (S) in a direction of a plane parallel to the corotron wires (48).

7. The arrangement according to one of the preceding claims, **characterized in that** a spring force of at least one spring (38) acts on the corotron wire insert (14a, 14b).

8. The arrangement according to claim 7, **characterized in that** the spring (38) electrically connects the reflector element (46) to the voltage supply unit (22a, 22b).

9. The arrangement according to one of the preceding claims 4, 5 and 6 to 8, as long as dependent on claim 4, **characterized in that** the reflector element (46) is arranged isolated from further elements of the printer or copier by electrically insulating elements (56, 58).

10. The arrangement according to one of the claims 4, 5 and 6 to 9, as long as dependent on claim 4, **characterized in that** the reflector element (46) contains slots (50) through which gas, in particular an ozone-air-mixture escapes and/or is extracted.

11. The arrangement according to one of the claims 4, 5 and 6 to 10, as long as dependent on claim 4, **characterized in that** the reflector element (46) comprises an extruded profile.

12. The arrangement according to one of the claims 10 or 11, **characterized in that** a channel (52) for the extraction of the ozone-air-mixture is connected by connector elements (28a, 28b, 28c, 30a, 30b, 30c) to an ozone neutralizing unit.

13. The arrangement according to claim 12, **characterized in that** the side of the corotron wire insert (14a, 14b) facing away from the corotron wires (48) and the carrier (42) form the channel (52).

14. The arrangement according to one of the claims 12 or 13, **characterized in that** the connector elements (28a, 28b, 30a, 30b) have seal elements at contacting surfaces thereof.

15. The arrangement according to one of the claims 12 to 14, **characterized in that** the connector elements (28c, 30c) have surfaces that overlap one another.

16. The arrangement according to one of the claims 12 to 15, **characterized in that** the connector elements (28c, 30c) have a trapezoidal cross-section.

17. The arrangement according to one of the preceding claims, **characterized in that** a plurality of corotron wire inserts (14a, 14b) are provided and **in that** each corotron wire insert (14a, 14b) is fed by a separate voltage supply unit (22a, 22b).

18. The arrangement according to one of the preceding claims, as long as dependent on claim 4, **characterized in that** the voltage supply unit (22a, 22b) contains at least two power pack parts (24a, 24b, 26a, 26b), one power pack part (24a, 24b) serving for the supply of the corotron wire and a second power pack part (26a, 26b) serving for the supply of the reflector element (46).

19. The arrangement according to one of the preceding claims, **characterized in that** the corotron wire (48) is supplied with a voltage, preferably in the range from 16 to 20 kV, and having a frequency in the range from 3 to 5 kHz.

20. The arrangement according to one of the claims 4, 5 and 6 to 19, as long as dependent on claim 4, **characterized in that** the reflector element (46) is supplied with a D.C. voltage, preferably in a range from 3 to 5 kV.

21. The arrangement according to one of the preceding claims, **characterized in that** at least one distributor element (56) is attached to the corotron wire insert (14a, 14b), said at least one distributor element containing, on the one hand, a mechanical actuation element (57) for handling the corotron wire insert (14a, 14b) and, on the other hand, a contact pin (62) of the electrical plug-type connector (40a, 40b) for connecting the voltage supply unit (22a, 22b) to the corotron wire insert (14a, 14b).

22. The arrangement according to one of the preceding claims, **characterized in that** the plug-type connector (40a, 40b, 62) is resiliently seated on the voltage supply unit (22a, 22b) and/or on the distributor element (56) according to claim 21.

23. The arrangement according to one of the preceding claims, **characterized in that** the carrier (42) comprises an insulated plastic and has an H-shaped cross-section,
and **in that** the voltage supply unit (22a, 22b) is arranged in the first rectangular recess of the H-shaped carrier (42) and the corotron wire insert (14a, 14b) is arranged in the second rectangular recess.

24. The arrangement according to one of the preceding claims, **characterized in that** the corotron wire insert (14a, 14b) is guided in the carrier (42) by guide elements (36a, 36b) and the carrier (42) is arranged in a pivotable arrangement (10).

## Revendications

1. Dispositif pour un corotron pour un processus électrographique, en particulier dans une imprimante ou un copieur, comportant au moins un support (42), dans lequel est disposé un fil de corotron (48) alimenté avec une haute tension électrique, et comportant au moins une unité d'alimentation en tension (22a, 22b) qui produit la haute tension, le support (42) recevant l'unité d'alimentation en tension (22a, 22b), **caractérisé en ce que** le fil de corotron (48) est disposé dans le support (42) dans un tiroir de fils de corotron (14a, 14b), **en ce qu'**une connexion électrique entre l'unité d'alimentation en tension (22a, 22b) et le tiroir de fils de corotron (14a, 14b) comporte au moins un connecteur (40a, 40b, 62) qui est disposé de façon mobile, de sorte que, dans l'état connecté du connecteur, le tiroir de fils de corotron (14a, 14b) est mobile dans le support (42).

2. Dispositif selon la revendication 1, **caractérisé en ce que** trois fils de corotron (48) sont disposés dans le tiroir de fils de corotron (14a, 14b).

3. Dispositif selon l'une des revendications 1 ou 2, **caractérisé en ce que** l'unité d'alimentation en tension (22a, 22b) est disposée le long du tiroir de fils de corotron (14a, 14b).

4. Dispositif selon l'une des revendications précédentes, **caractérisé en ce que** le tiroir de fils de corotron (14a, 14b) comporte un élément réflecteur (46), ledit élément réflecteur (46) étant connecté électriquement à l'unité d'alimentation en tension (22a, 22b).

5. Dispositif selon la revendication 4, **caractérisé en ce que** l'élément réflecteur (46) est constitué d'un profilé extrudé en aluminium, qui est de préférence chromé dur.

6. Dispositif selon l'une des revendications précédentes, **caractérisé en ce que** le tiroir de fils de corotron (14a, 14b) est introduit dans des éléments de guidage (36a, 36b), et **en ce que** les éléments de guidage (36a, 36b) et le tiroir de fils de corotron (14a, 14b) présentent un jeu (S) dans la direction d'un plan parallèle aux fils de corotron (48).

7. Dispositif selon l'une des revendications précédentes, **caractérisé en ce qu'**une force de ressort d'au moins un ressort (38) agit sur le tiroir de fils de corotron (14a, 14b).

8. Dispositif selon la revendication 7, **caractérisé en ce que** le ressort (38) assure le raccordement électrique de l'élément réflecteur (46) à l'unité d'alimentation en tension (22a, 22b).

9. Dispositif selon l'une des revendications 4, 5 et 6 à 8 lorsqu'elles sont prises en dépendance de la revendication 4, **caractérisé en ce que** l'élément réflecteur (46) est isolé électriquement des autres éléments de l'imprimante ou du copieur par des éléments d'isolation électrique (56, 58).

10. Dispositif selon l'une des revendications 4, 5 et 6 à 9 lorsqu'elles sont prises en dépendance de la revendication 4, **caractérisé en ce que** l'élément réflecteur (46) comprend des fentes (50) par lesquelles le gaz, en particulier un mélange air-ozone, est évacué et/ou aspiré.

11. Dispositif selon l'une des revendications 4, 5 et 6 à 10 lorsqu'elles sont prises en dépendance de la revendication 4, **caractérisé en ce que** l'élément réflecteur (46) est constitué d'un profilé extrudé.

12. Dispositif selon l'une des revendications 10 ou 11, **caractérisé en ce qu'**un canal (52) pour l'aspiration du mélange ozone-air est raccordé à une unité d'annihilation de l'ozone par des éléments de raccordement (28a, 28b, 28c, 30a, 30b, 30c).

13. Dispositif selon la revendication 12, **caractérisé en ce que** le côté du tiroir de fils de corotron (14a, 14b) qui est opposé aux fils de corotron (48) et le support (42) forment le canal (52).

14. Dispositif selon l'une des revendications 12 ou 13, **caractérisé en ce que** les éléments de raccordement (28a, 28b, 28c, 30a, 30b, 30c) présentent des éléments d'étanchéité sur leurs surfaces de contact.

15. Dispositif selon l'une des revendications 12 à 14, **caractérisé en ce que** les éléments de raccordement (28c, 30c) présentent des surfaces qui se chevauchent mutuellement.

16. Dispositif selon l'une des revendications 12 à 15, **caractérisé en ce que** les éléments de raccordement (28c, 30c) présentent une section trapézoïdale.

17. Dispositif selon l'une des revendications précédentes, **caractérisé en ce que** plusieurs tiroirs de fils de corotron (14a, 14b) sont prévus, et **en ce que** chaque tiroir de fils de corotron (14a, 14b) est alimenté par une unité d'alimentation en tension séparée (22a, 22b).

18. Dispositif selon l'une des revendications précédentes, lorsqu'elles sont prises en dépendance de la revendication 4, **caractérisé en ce que** l'unité d'alimentation en tension (22a, 22b) comprend au moins deux blocs d'alimentation (24a, 24b, 26a, 26b), dont un bloc d'alimentation (24a, 24b) sert à l'alimentation du fil de corotron et un deuxième bloc d'alimentation (26a, 26b) sert à l'alimentation de l'élément réflecteur (46).

19. Dispositif selon l'une des revendications précédentes, **caractérisé en ce que** le fil de corotron (48) est alimenté en une tension qui se situe, de préférence, dans une plage de 16 à 20 kV, à une fréquence comprise entre 3 et 5 kHz.

20. Dispositif selon l'une des revendications 4, 5 et 6 à 19 lorsqu'elles sont prises en dépendance de la revendication 4, **caractérisé en ce que** l'élément réflecteur (46) est alimenté en une tension continue, qui se situe de préférence dans une plage de 3 à 5 kV.

21. Dispositif selon l'une des revendications précédentes, **caractérisé en ce que** sur le tiroir de fils de corotron (14a, 14b), est monté au moins un élément répartiteur (56), qui comprend d'une part un élément d'actionnement (57) pour la manipulation du tiroir de fils de corotron (14a, 14b), et d'autre part une fiche de contact (62) du connecteur électrique (40a, 40b) pour le raccordement entre l'unité d'alimentation en tension (22a, 22b) et le tiroir de fils de corotron (14a, 14b).

22. Dispositif selon l'une des revendications précédentes, **caractérisé en ce que** le connecteur (40a, 40b, 62) est monté élastiquement sur l'unité d'alimentation en tension (22a, 22b) et/ou sur l'élément répartiteur (56) selon la revendication 21.

23. Dispositif selon l'une des revendications précédentes, **caractérisé en ce que** le support (42) est constitué d'une matière plastique isolante et présente une section en H, et **en ce que** l'unité d'alimentation en tension (22a, 22b) est disposée dans le premier évidement rectangulaire du support en H (42), et le tiroir de fils de corotron (14a, 14b) est disposé dans le deuxième évidement rectangulaire.

24. Dispositif selon l'une des revendications précédentes, **caractérisé en ce que** le tiroir de fils de corotron (14a, 14b) est guidé dans le support (42) par des éléments de guidage (36a, 36b), et **en ce que** le support (42) est disposé dans un agencement oscillant (10).
